# EUROPEAN PATENT SPECIFICATION

(11) **EP 1 545 932 B1**
(45) Date of publication and mention of the grant of the patent: **20.02.2008**
(21) Application number: 03792925.4
(22) Date of filing: 21.08.2003
(51) Int. Cl.: B60R 5/04, B60P 7/00

(54) **DEVICE IN A VEHICLE**
VORRICHTUNG IN EINEM FAHRZEUG
DISPOSITIF A MONTER DANS UN VEHICULE

(30) Priority: 21.08.2002 SE 0202498
(43) Date of publication of application: 29.06.2005
(73) Proprietor: Modul-System HH AB, 431 22 Mölndal (SE)
(72) Inventor: CARLSSON, Anders, S-422 50 Hisings-Backa (SE)
(74) Representative: Edlund, Fabian
(86) International application number: PCT/SE2003/001293
(87) International publication number: WO 2004/018259

(56) References cited:
- GB-A- 2 212 384
- GB-A- 2 348 797
- JP-A- 3 136 940
- JP-A- 8 072 714
- US-A- 2 093 359
- US-B1- 6 270 138

## Description

### TECHNICAL FIELD

The present invention relates to a device for securing cargo on a shelf in a vehicle, the said shelf having a front edge and a rear edge, and the said device comprising a raisable and lowerable element and a first locking arrangement, the said element being locked in a raised position through the action of the said first locking arrangement when the said device is in the securing position, wherein the said element, which is connected to the front edge of the said shelf, is raised from and extends from the front edge of the said shelf when the said device is in the securing position.

### BACKGROUND ART

JP 08 072714 A describes a device according to the preamble of claim 1.

Vehicles, especially motor vehicles intended, for delivery and goods transport purposes, may contain shelves intended to carry cargo. On such shelves hitherto known, the cargo carried has either been inadequately secured or has been secured by complicated means.

When cargo is inadequately secured on a shelf in a vehicle this can result in the said cargo shifting when the vehicle is turning, braking or accelerating, for example, the said cargo thereby coming partially or entirely off the shelf. If the cargo leaves the shelf entirely, the cargo may obviously be damaged or may cause damage. Furthermore, if the cargo shifts partially, this constitutes a danger due to the increased risk of the cargo being damaged or causing damage.

When cargo is secured on a shelf in a vehicle by complicated means such as lashing or fastening or the like, the cargo may certainly be adequately secured. The complicated way in which the cargo is secured means that a number of more or less complex operations are required when loading and unloading the cargo. Using such complicated means therefore takes time and manpower, which in the case of delivery or goods transport cannot be regarded as insignificant.

For these reasons there is a need for a device which simultaneously provides a quick, simple and adequate means of securing cargo on a shelf in a vehicle.

### DISCLOSURE OF INVENTION

The present invention relates to a device for securing cargo according to claim 1.

The said device comprises a raisable and lowerable element which may be a mesh or fabric element. The said mesh or fabric element may comprise a bar at the top edge. In the lowered position the said bar extends along the front edge of the said shelf, and in the raised position it extends above and essentially parallel to the front edge of the said shelf.

Where the said element is a mesh element, the element comprises mesh consisting of any suitable material such as polymer, textile and/or fibre material, for example. The mesh may also consist of metal material. The mesh element may be a suitable, conventional mesh element which will be known to a person skilled in the art.

Furthermore, where the said element is a fabric element, the element comprises fabric consisting of any suitable material such as polymer, textile and/or fibre material, for example. The fabric element may be a suitable, conventional fabric element which will be known to a person skilled in the art.

The said mesh element, the said fabric element and the said bar must furthermore be selected so that they are durable and are not damaged by cargo or anything else. For example, where they form part of the said element both mesh and fabric must be resistant to tearing by sharp corners on the cargo, for example.

When the element is in the raised position, the element extends from the front edge of the shelf, largely in an upwards direction. How the element extends and in what direction may be controlled when raising, for example by manipulating a bracket with associated arm on each side of the element. By manipulating a bracket with associated arm, a first directional axis will move solely in the depth direction of the shelf and for a limited length, and a second directional axis will control the height of the element in the height direction of the shelf in that the second directional axis has an upper and a lower position.

In addition to this, however, the invention also encompasses devices in which the direction of the element from the front edge of the shelf deviates from a largely upwards direction. For example, the direction of the element from the front edge of the shelf may deviate from a largely upwards direction when raising, through a curved movement in the depth/height direction of the shelf with a radius extending from the rear edge of the shelf.

The expression "the device secures cargo on a shelf" is here intended to mean that the device ensures that, at least over the front edge of the shelf, cargo does not come either partially or completely off the shelf when the vehicle is moving, for example.

The device "in the securing position" obviously secures cargo on the shelf also when the vehicle is not in motion. The expression "the vehicle is in motion" furthermore encompasses more or less abrupt motion during transport, which includes the vehicle turning, braking and/or accelerating.

Damage to the cargo and/or damage caused by the cargo can be prevented in that the device ensures that cargo does not come entirely off the shelf.

Furthermore, because the device ensures that cargo does not come partially off the shelf it is possible to prevent the cargo constituting a danger through an increased risk of the cargo being damaged or causing damage.

Cargo may be of any type and may consist, for example, of various goods and products, and may be in package form, for example.

The said shelf furthermore has a front edge and a rear edge, the front edge being the edge over which cargo is loaded or unloaded. The front edge is, for example, the edge furthest away from the inside of the vehicle body. Furthermore, the rear edge is broadly parallel with the front edge and the rear edge is an edge over which cargo is not loaded. The rear edge is, for example, the edge which is closest to the inside of the said vehicle body, the rear edge resting against the inside of the body, for example. The said shelf usually has two transverse edges, which run essentially parallel to one another between the front edge and the rear edge. The surface that is defined by the front edge, the rear edge and the two transverse edges constitutes the surface of the shelf on which cargo can be placed.

The said vehicle, especially a motor vehicle intended for delivery and goods transport purposes, contains the said shelves intended for carrying cargo.

The said element in the lowered position furthermore allows cargo to be efficiently loaded on to and unloaded from the shelf to which the element is connected. The said loading of cargo on to the shelf is suitably undertaken essentially over the front edge of the shelf and on to the shelf. The said unloading of cargo from the shelf is furthermore suitably undertaken from the shelf and over the front edge of the shelf.

The said device furthermore comprises a first locking arrangement, which makes it possible to lock the said element in a raised position when the said device is in the securing position. The said first locking arrangement may be of any suitable design and may consist of a stay arrangement, an "arm and a bracket" arrangement and/or a suitable suspension device. A suspension device may comprise a means of fixing the said element to any aforementioned shelf, for example, a higher shelf or roof inner.

Where it forms part of a stay arrangement, the said first locking arrangement may furthermore be designed with a suitable, conventional stay arrangement which will be known to a person skilled in the art.

Where the said first locking arrangement forms part of an "arm and a bracket" arrangement, the locking arrangement may be designed with a suitable, conventional "arm and bracket" arrangement, which will be known to a person skilled in the art. For example, the bracket in an "arm and bracket" arrangement may have a pattern of holes which guides the arm and hence the said element in the depth/height direction of the shelf. The arm then has two directional axes, one directional axis affording guidance in the depth direction of the shelf and the other directional axis affording guidance in the height direction of the shelf, which when raising gives the said element a movement essentially in the depth/height direction of the shelf.

When it forms part of a suspension device the said first locking arrangement may furthermore be designed with a suspension device that includes a hook or hooks, for example.

The said device may also comprise a second locking arrangement by means of which the said element can be locked in the said lowered position. As stated previously, the lowered position allows cargo to be efficiently loaded on to and unloaded from the shelf to which the element is connected. The said second locking arrangement may be of any suitable design and may be of a design which has been described in relation to the said first locking arrangement. When the said device comprises a first locking arrangement and a second locking arrangement, the two locking arrangements may be of identical or differing design.

The said device may furthermore also comprise a further "first locking arrangement", the location of which in relation to the said "first locking arrangement" is such that the device is endowed with and thereby provides further stability in the "securing position". For example, they can be located so that their fixings to the element are far removed from one another in a horizontal direction. The term "far removed from one another" here and hereinafter signifies to or on the said element at each end of the said element in the horizontal direction, but essentially at the same height in the vertical direction. The said horizontal direction is therefore essentially parallel with the longitudinal direction of the shelf, assuming that the fixings also coincide in the depth direction, which also applies to the second "horizontal direction" as will be discussed later. The expression "at each end of the said element" also includes the embodiment of the said device which is "to or on the said element" a short distance in from the one and/or the other end.

In addition, the said device may also comprise a further "second locking arrangement" and may be located in relation to the said "second locking arrangement" so that the device is endowed with and thereby provides further stability in the "securing position". For example, they can be located so that their direct or indirect fixings to the shelf or the inside of the vehicle body are far removed from one another in a horizontal direction of the shelf or the inside of the vehicle body, but essentially at the same height in the vertical direction. The term "far removed from one another in a horizontal direction of the shelf or the inside of the vehicle body" usually corresponds to the distance between the locations of the "first" locking arrangements on the element.

One embodiment according to the present invention furthermore comprises a device, which has been described here, in which the said element, which is connected to the front edge of the said shelf, is raised from and extends along the front edge of the said shelf when the said device is in the securing position. The term "along" is here taken to mean at least one section along the front edge of the said shelf on which cargo is to be secured.

According to the present invention the said element is unreeled from a reeling device and also reeled up on the said reeling device, the said reeling device being firmly connected to the front edge of the shelf. The said element is a mesh or fabric element and, because the mesh in the mesh element must be capable of reeling up on a reel member forming part of the said reeling device, the mesh must not be too stiff. At the same time the mesh must not be too pliable, in order to prevent the formation of localized thicker sections which can catch in a casing forming part of the said reeling device. The fabric, and also the mesh, should furthermore present a compact format in the reeled state.

Wherever anything in this description is described as being arranged in connection with anything else, this may include, for example, screws, rivets, clips, so-called "male-female couplings" and/or other means suited to the purpose and known to the person skilled in the art, the same likewise applying wherever anything is described as being fastened on or to anything else.

The said reeling device may be a suitable, conventional reeling device known to a person skilled in the art. The reeling device comprises a reel shaft, from which a mesh or fabric element can be reeled off and on to which it can be reeled. End pieces may be located on either side of the reel shaft, for example. Furthermore, one or more end pieces may be provided with a spring. Any end piece may be fastened in a mesh or fabric casing, the end piece being inserted and guided by the geometry of the mesh or fabric casing.

In yet another embodiment of a device according to the present invention the said device comprises a stay part which is fastened to the said element at a first point, the said stay part lending stability to the said device in the securing position in that a second point on the said stay part is also fastened directly or indirectly to the said shelf or the inside of the vehicle body by means of a fastener.

The said stay part may be fastened to the said element, for example by screws, rivets, clips, so-called "male-female couplings" and/or other means suited to the purpose and known to the person skilled in the art. Furthermore the fastener by means of which the said stay part is fastened directly or indirectly to the said shelf or the inside of the vehicle body may consist, for example, of screws, rivets, clips, so-called "male-female couplings" and/or other means suited to the purpose and known to the person skilled in the art.

The said first point and second point must be selected so that the distance between them assists in providing the necessary stability. The said first point and second point may furthermore be selected so that they are each situated at one end of the stay.

A further embodiment according to the present invention relates to a device in which the said element is a mesh element.

Yet another embodiment of the present invention relates to a device which comprises an arm and a bracket, the said arm being fastened to the said element at a first fixing point and movably fastened to the said bracket in a second fixing area, by means of which said movable fastening the arm can be placed in a raised or a lowered position, and the said bracket being fastened directly or indirectly to the said shelf or the inside of the vehicle body by means of a fastener.

In the same way as the said stay part, the said arm may lend stability to the said device in the securing position, and the said arm may also lend stability to the said device in the lowered position.

The said arm may be fastened to the said element, for example by screws, rivets, clips, so-called "male-female couplings" and/or other means suited to the purpose and known to the person skilled in the art. Furthermore the fastener by means of which the said bracket is fastened directly or indirectly to the said shelf or the inside of the vehicle body may consist, for example, of screws, rivets, clips, so-called "male-female couplings" and/or other means suited to the purpose and known to the person skilled in the art.

A further embodiment of a device according to the present invention relates to a device comprising a further stay part, which has been described previously, the said further stay part being fastened to the said element at a third point, and in the securing position a fourth point on the said further stay part being fastened directly or indirectly to the said shelf or the inside of the vehicle body by means of a further fastener.

The said further stay part may, but need not necessarily have largely the same design and function as the original stay part. Furthermore, the location of the said further stay part in relation to the original stay part may be such that the device is endowed with and therefore affords further stability in the "securing position". For example, they may be located so that they are fastened to the said element "far removed from one another" in accordance with the earlier description of the first locking arrangements, at the said first point and the said third point respectively in the horizontal direction.

The stay parts may furthermore be located so that, for example, they are fastened by means of fasteners directly or indirectly to the said shelf or the inside of the vehicle body far removed from one another in a horizontal direction of the shelf or the inside of the vehicle body, but essentially at the same height in the vertical direction. The term "far removed from one another in a horizontal direction of the shelf or the inside of the vehicle body" usually corresponds to the distance between the locations of the stay parts on the element.

Yet another embodiment of a device according to the present invention relates to a device comprising a further arm and a further bracket as have been described previously, the said further arm being fastened to the said element at a third fixing point and moveably fastened to the said further bracket at a fourth fixing point, and the said further bracket being fastened directly or indirectly to the said shelf or the inside of the vehicle body by means of a further fastener.

The said further arm and further bracket may but need not necessarily have largely the same design and function as the original arm and the original bracket. Furthermore, the location of the said further arm in relation to the original arm may be such that the device is endowed with and therefore affords further stability in the "securing position". For example, they may be located so that they are fastened to the said element "far removed from one another" in accordance with the earlier description of the first locking arrangements, at the said first point and the said third point respectively in the horizontal direction.

The original and the further fastener may furthermore be located so that the brackets are far removed from one another in a horizontal direction of the shelf or the inside of the vehicle body, but essentially at the same height in the vertical direction. The term "far removed from one another in a horizontal direction of the shelf or the inside of the vehicle body" usually corresponds to the distance between the locations of the arms on the element.

A further embodiment according to the present invention relates to a device in which the said element comprises a bar.

Yet another embodiment according to the present invention relates to a device in which the said element comprises transverse arrangements, which arrangements connect the element to the front edge of the shelf.

### BRIEF DESCRIPTION OF DRAWINGS

Fig. 1 shows an oblique perspective view from the side of an embodiment of the said device which is connected to a shelf in a vehicle.
Fig. 2 shows an oblique perspective view from above and from the side of an embodiment of the said device which is connected to a shelf.
Fig. 3 shows an oblique perspective view from above and from the side of further embodiment of the said device which is connected to a shelf.
Fig. 4 shows an oblique perspective view from above and from the side of an arm and a bracket, the arm being moveably fastened to the said bracket.

### MODE(S) FOR CARRYING OUT THE INVENTION

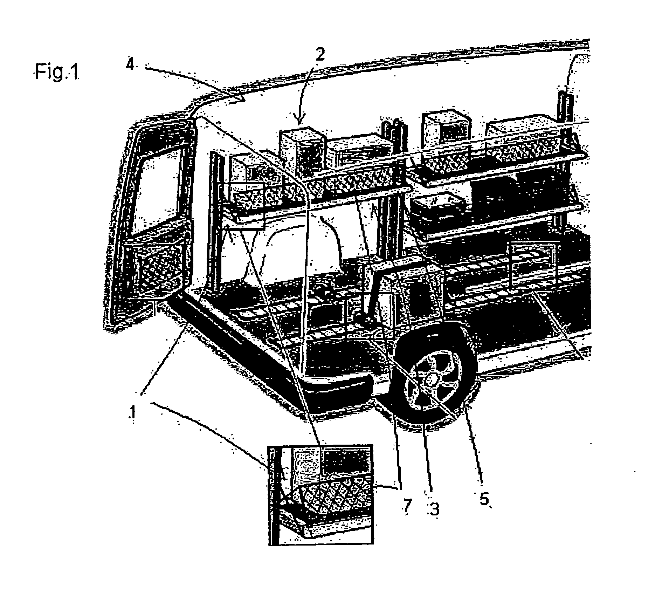

Fig. 1 shows an oblique perspective view from the side of a device 1 according to the present invention, which secures a cargo 2 on a shelf 3 in a vehicle 4, that is to say the device 1 is in the securing position. The device 1 comprises a raisable and lowerable element 7, which is raised and connected to the front edge 5 of the shelf.

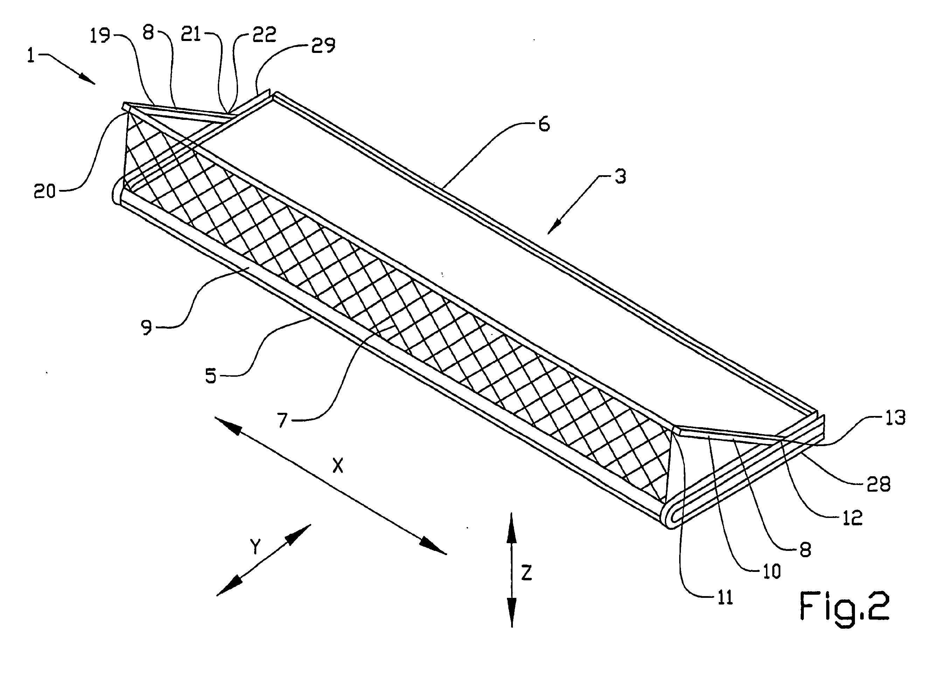

Fig. 2 shows an oblique perspective view from above and from the side of a device 1 according to the present invention which is in the securing position. The device 1 is connected to a shelf 3, the shelf 3 having a front edge 5, a rear edge 6, two transverse edges 28 and 29, a longitudinal direction X, a depth direction Y and a height direction Z. The front edge 5 and the rear edge 6 are parallel to one another. The two transverse edges 28 and 29 are also parallel to one another and run between the front edge 5 and the rear edge 6. The surface defined by the front edge 5, the rear edge 6 and the two transverse edges 28 and 29 constitutes the surface of the shelf on which cargo can be placed.

The device 1 furthermore has a raisable and lowerable element 7, (in this case a mesh element) and two "first locking arrangements" 8 and 8, the element 7 being locked in a raised position through the action of the first locking arrangement 8. The device 1 is connected by the element 7 to the front edge 5 of the said shelf. The element 7 is raised from and extends from the front edge 5 of the shelf, since the device 1 is in the securing position. The element 7 is furthermore reeled off from a reeling device 9, which is firmly connected to the front edge 5 of the shelf

The device 1 comprises a stay part 10, which is fastened to the element 7 at a first point 11. The stay part 10 here lends stability to the device 1 in the securing position in that a second point 12 on the stay part 10 is fastened directly to the shelf 3 by means of a fastener 13.

In addition the device 1 comprises a further stay part 19, which at a third point 20 is fastened to the element 7 and here in the securing position a fourth point 21 on the further stay part 19 is fastened directly to the shelf 3 by means of a further fastener 22.

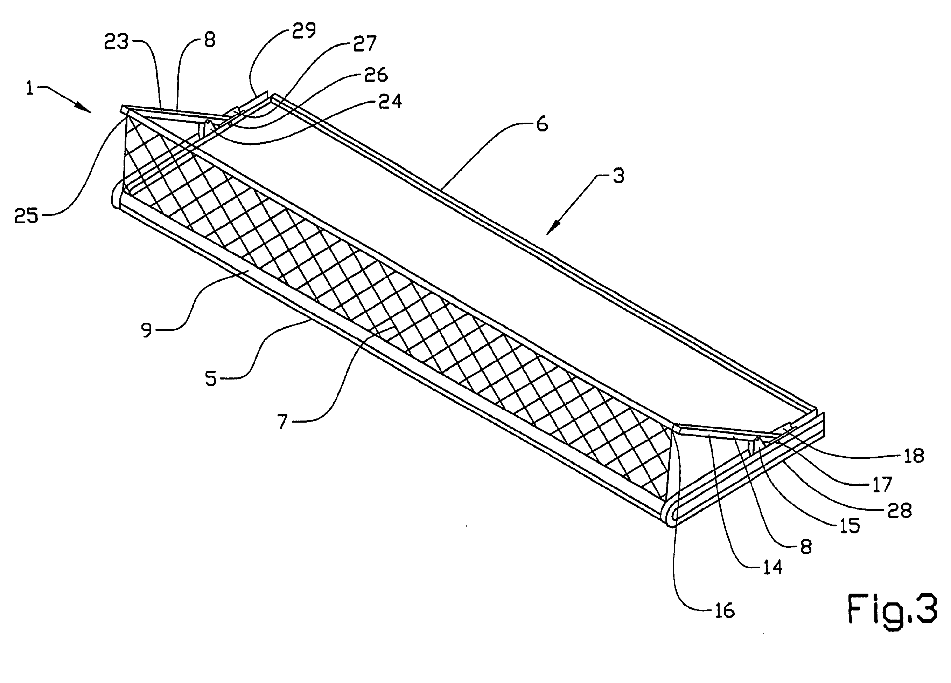

Fig. 3 shows an oblique perspective view from above and from the side of further device 1, which is in the securing position. The device 1 in Fig. 3 differs from the device 1 in Fig. 2 only in respect of the two "first locking arrangements" 8 and 8. Thus, unless otherwise indicated, all reference numbers in Fig. 3 and the longitudinal direction, depth direction and height direction of the shelf are the same as in Fig. 2.

In Fig. 3 the device 1 comprises an arm 14 and a bracket 15. The arm 14 is fastened to the element 7 (in this case a mesh element) at a first fixing point 16 and is moveably fastened to the bracket 15 in a second fixing area 17. Furthermore, the arm 14, in a raised position, and the bracket 15 are fastened directly to the shelf 3 by means of a fastener 18.

In Fig. 3 the device 1 furthermore comprises a further arm 23 and a further bracket 24, the said further arm 23 being fastened to the said element 7 at a third fixing point 25 and moveably fastened to the said further bracket 24 at a fourth fixing point 26, and the said further bracket 24 being fastened directly or indirectly to the said shelf 3 or the inside of the vehicle body by means of a further fastener 27.

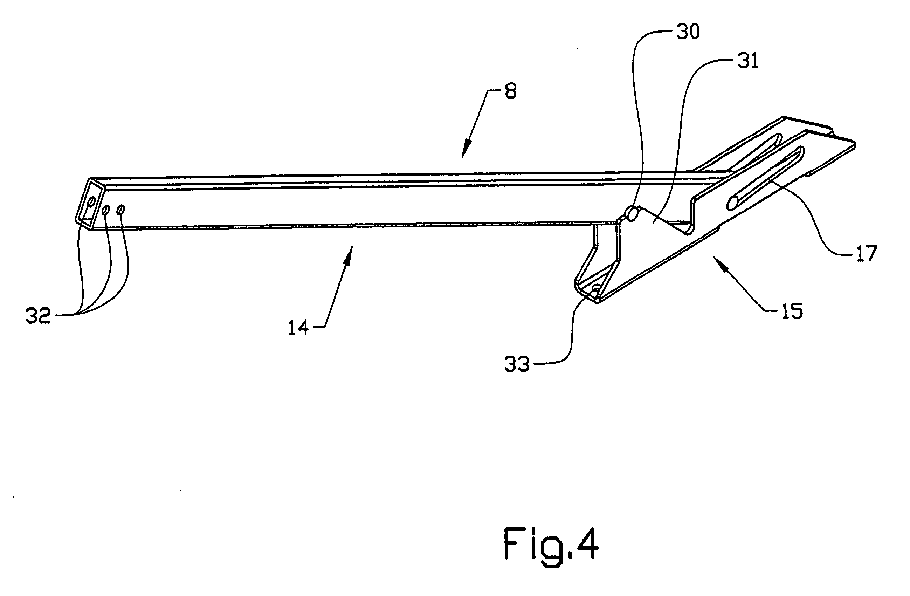

Fig. 4 shows an oblique perspective view from above and from the side of a "first locking arrangement" 8, that is to say an arm 14 in a raised position and a bracket 15, the arm 14 being moveably fastened to the said bracket 15 in a second fixing area 17. The arm 14 furthermore has a continuous shaft 30 and the bracket 15 has a projection 31, with a recess. The continuous shaft 30 is locked in the recess in the projection 31. In addition, the arm 14 has first holes 32 for fastening the arm 14 to the element at the first fixing point. The bracket 15 furthermore has second holes 33 for fastening the bracket 15 directly to the shelf by means of a fastener.

## Claims

1. Device (1) for securing cargo (2) on a shelf (3) in a vehicle (4), the said shelf (3) having a front edge (5) and a rear edge (6) and the said device (1) comprising a raisable and lowerable element (7) and a first locking arrangement (8), the said element (7) being locked in a raised position through the action of the said first locking arrangement (8) when the said device (1) is in the securing position, wherein the said element (7), which is connected to the front edge (5) of the said shelf, is raised from and extends from the front edge (5) of the said shelf when the said device (1) is in the securing position, **characterized in that** the said element (7) can be reeled off from a reeling device (9) and can also be reeled up on the said reeling device (9), the said reeling device (9) being firmly connected to the front edge (5) of the shelf.

2. Device (1) according to Claim 1, **characterized in that** the said device (1) comprises a stay part (10) which is fastened to the said element (7) at a first point (11), the said stay part (10) lending stability to the said device (1) in the securing position **in that** a second point (12) on the said stay part (10) is also fastened directly or indirectly to the said shelf (3) or the inside of the vehicle body by means of a fastener (13).

3. Device (1) according to claim 1 or 2, **characterized in that** the said element (7) is a mesh element.

4. Device (1) according to any one of the preceding Claims, **characterized in that** the said device (1) comprises an arm (14) and a bracket (15), the said arm (14) being fastened to the said element (7) at a first fixing point (16) and moveably fastened to the said bracket (15) in a second fixing area (17), by means of which said moveable fastening the arm (14) can be placed in a raised or lowered position, and the said bracket is fastened directly or indirectly to the said shelf (3) or the inside of the vehicle body by means of a fastener (18).

5. Device (1) according to any one of Claims 2 or 3, **characterized in that** the said device (1) comprises a further stay part (19), the said further stay part (19) being fastened to the said element (7) at a third point (20), and in the securing position a fourth point (21) on the said further stay part (19) being fastened directly or indirectly to the said shelf (3) or the inside of the vehicle body by means of a further fastener (22).

6. Device (1) according to any one of Claims 3 or 4, **characterized in that** the said device (1) comprises a further arm (23) and a further bracket (24), the said further arm (23) being fastened to the said element (7) at a third fixing point (25) and moveably fastened to the said further bracket (24) at a fourth fixing point (26), and the said further bracket (24) being fastened directly or indirectly to the said shelf (3) or the inside of the vehicle body by means of a further fastener (27).

7. Device (1) according to any one of the preceding Claims, **characterized in that** the said element (7) comprises a bar.

8. Device (1) according to any one of the preceding Claims, **characterized in that** the said element (7) comprises transverse arrangements, which connect the element to the front edge of the shelf.

## Patentansprüche

1. Vorrichtung (1) zur Sicherung von Ladung (2) auf einem Ablagebrett (3) in einem Fahrzeug (4), wobei das Ablagebrett (3) eine Vorderkante (5) und eine Hinterkante (6) hat, und wobei die Vorrichtung (1) ein anhebbares und senkbares Element (7) und eine erste Verriegelungsvorrichtung (8) umfasst, und wobei das Element (7) in einer angehobenen Position durch die Einwirkung der ersten Verriegelungsvorrichtung (8) verriegelt/arretiert wird, wenn die Vorrichtung (1) sich in der Sicherungsposition befindet, wobei das mit der Vorderkante (5) des Ablagebretts verbundene Element (7), von der Vorderkante (5) des Ablagebretts angehoben wird und von dieser ausgeht, wenn die Vorrichtung (1) sich in der Sicherungsposition befindet, **dadurch gekennzeichnet, dass** das Element (7) von einer Wickelvorrichtung (9) abgewickelt werden kann und auf dieser Wickelvorrichtung (9) ebenso aufgewickelt werden kann, wobei diese Wickelvorrichtung (9) mit der Vorderkante (5) des Ablagebretts fest verbunden ist.

2. Vorrichtung (1) nach Anspruch 1, **dadurch gekennzeichnet, dass** die Vorrichtung (1) eine Strebe (10) umfasst, die an einem ersten Punkt (11) an dem Element (7) befestigt ist, wobei die Strebe (10) der Vorrichtung (1) in der Sicherungsposition Stabilität verleiht, insofern als ein zweiter Punkt (12) auf der Strebe (10) direkt oder indirekt ebenfalls mit dem Ablagebrett (3) oder der Innenseite des Fahrzeugkörpers mittels eines Befestigungsmittels (13) verbunden ist.

3. Vorrichtung (1) nach Anspruch 1 oder 2, **dadurch gekennzeichnet, dass** das Element (7) ein Netz ist.

4. Vorrichtung (1) nach einem der vorhergehenden Ansprüche, **dadurch gekennzeichnet, dass** die Vorrichtung (1) einen Arm (14) und eine eckige Klammer (15) umfasst, wobei der Arm (14) an einem ersten Befestigungspunkt (16) an dem Element (7) befestigt ist und in einem zweiten Befestigungsbereich (17) beweglich an der eckigen Klammer (15) befestigt ist, wobei durch diese bewegliche Befestigung der Arm (14) in einer angehobenen oder gesenkten Position platziert werden kann und die Klammer direkt oder indirekt ebenfalls mit dem Ablagebrett (3) oder der Innenseite des Fahrzeugkörpers mittels eines Befestigungsmittels (18) verbunden ist.

5. Vorrichtung (1) nach einem der Ansprüche 2 oder 3, **dadurch gekennzeichnet, dass** die Vorrichtung (1) eine weitere Strebe (19) umfasst, die weitere Strebe (19) an dem Element (7) ar einem dritten Punkt (20) befestigt ist und in der Sicherungsposition ein vierter Punkt (21) auf der weiteren Strebe (19) direkt oder indirekt mit dem Ablagebrett (3) oder der Innenseite des Fahrzeugkörpers mittels eines weiteren Befestigungsmittels (22) verbunden ist.

6. Vorrichtung (1) nach einem der Ansprüche 3 oder 4, **dadurch gekennzeichnet, dass** die Vorrichtung (1) einen weiteren Arm (23) und eine weitere eckige Klammer (24) umfasst, wobei der weitere Arm (23) an dem Element (7) an einem dritten Befestigungspunkt (25) befestigt ist und an einem vierten Befestigungspunkt (26) beweglich an der weiteren Klammer (24) befestigt ist, und wobei die weitere Klammer (24) direkt oder indirekt mit dem Ablagebrett (3) oder der Innenseite des Fahrzeugkörpers mittels eines weiteren Befestigungsmittels (27) verbunden ist.

7. Vorrichtung (1) nach einem der vorhergehenden Ansprüche, **dadurch gekennzeichnet, dass** das Element (7) einen Stab umfasst.

8. Vorrichtung (1) nach einem der vorhergehenden Ansprüche, **dadurch gekennzeichnet, dass** das Element (7) querverlaufende Anordnungen umfasst, die das Element mit der Vorderkante des Ablagebretts verbinden.

## Revendications

1. Dispositif (1) pour fixer une cargaison (2) sur une étagère (3) dans un véhicule (4), ladite étagère (3) ayant un bord avant (5) et un bord arrière (6) et ledit dispositif (1) comprenant un élément pouvant être relevé et abaissé (7) et un premier agencement de verrouillage (8), ledit élément (7) étant verrouillé dans une position relevée à travers l'action dudit premier agencement de verrouillage (8) lorsque ledit dispositif (1) est dans la position de fixation, où ledit élément (7), qui est relié au bord avant (5) de ladite étagère, est relevé à partir de et s'étend à partir du bord avant (5) de ladite étagère lorsque ledit dispositif (1) est dans la position de fixation, **caractérisé en ce que** ledit élément (7) peut être déroulé depuis un dispositif enrouleur (9) et peut également être enroulé sur ledit dispositif enrouleur (9), ledit dispositif enrouleur (9) étant fermement relié au bord avant (5) de l'étagère.

2. Dispositif (1) selon la revendication 1 **caractérisé en ce que** ledit dispositif (1) comprend une partie de support (10) qui est attachée audit élément (7) à un premier point (11), ladite partie de support (10) apportant une stabilité audit dispositif (1) dans la position de fixation **en ce qu'**un deuxième point (12) sur ladite partie de support (10) est également attaché directement ou indirectement à ladite étagère (3) ou à l'intérieur du corps du véhicule au moyen d'un élément d'attache (13).

3. Dispositif (1) selon la revendication 1 ou 2, **caractérisé en ce que** ledit élément (7) est un élément à mailles.

4. Dispositif (1) selon l'une quelconque des revendications précédentes, **caractérisé en ce que** ledit dispositif (1) comprend un bras (14) et un élément de soutien (15), ledit bras (14) étant attaché audit élément (7) à un premier point de fixation (16) et attaché de manière mobile audit élément de soutien (15) dans une deuxième zone de fixation (17), attachement mobile au moyen duquel le bras (14) peut être placé dans une position relevée ou abaissée, et ledit élément de soutien est attaché directement ou indirectement à ladite étagère (3) ou à l'intérieur du corps du véhicule au moyen d'un élément d'attache (18).

5. Dispositif (1) selon l'une quelconque des revendications 2 ou 3, **caractérisé en ce que** ledit dispositif (1) comprend une partie de support supplémentaire (19), ladite partie de support supplémentaire (19) étant attachée audit élément (7) à un troisième point (20), et dans la position de fixation un quatrième point (21) sur ladite partie de support supplémentaire (19) étant attachée directement ou indirectement à ladite étagère (3) ou à l'intérieur du corps du véhicule au moyen d'un élément d'attache supplémentaire (22).

6. Dispositif (1) selon l'une quelconque des revendications 3 ou 4, **caractérisé en ce que** ledit dispositif (1) comprend un bras supplémentaire (23) et un élément de soutien supplémentaire (24), ledit bras supplémentaire (23) étant attaché audit élément (7) à un troisième point de fixation (25) et attaché de manière mobile audit élément de soutien supplémentaire (24) à un quatrième point de fixation (26), et ledit élément de soutien supplémentaire (24) étant attaché directement ou indirectement à ladite étagère (3) ou à l'intérieur du corps du véhicule au moyen d'un élément d'attache supplémentaire (27).

7. Dispositif (1) selon l'une quelconque des revendications précédentes, **caractérisé en ce que** ledit élément (7) comprend une barre.

8. Dispositif (1) selon l'une quelconque des revendications précédentes, **caractérisé en ce que** ledit élément (7) comprend des agencements transversaux, qui relient l'élément au bord avant de l'étagère.
